# EUROPÄISCHE PATENTSCHRIFT

(11) **EP 1 524 911 B1**
(45) Veröffentlichungstag und Bekanntmachung des Hinweises auf die Patenterteilung: **29.10.2008**
(21) Anmeldenummer: 03740467.0
(22) Anmeldetag: 19.07.2003
(51) Int. Cl.: A23F 3/00, A23L 1/236, A61K 9/20, A23L 1/00, A23L 2/00

(54) **ISOMALTULOSE-HALTIGE INSTANT-GETRÄNKEPULVER ENTHALTEND HARNSTOFF**
ISOMALTULOSE-CONTAINING INSTANT BEVERAGE POWDER COMPRISING UREA
POUDRES POUR BOISSONS INSTANTANEES CONTENANT DE L'ISOMALTULOSE ET DE L'UREE

(30) Priorität: 19.07.2002 DE 10232796
(43) Veröffentlichungstag der Anmeldung: 27.04.2005
(73) Patentinhaber: SÜDZUCKER AKTIENGESELLSCHAFT, 68165 Mannheim (DE)
(72) Erfinder: DÖRR, Tillmann, 67591 Hohen-Sülzen (DE); GUDERJAHN, Lutz, 67591 Offstein (DE); KEME, Thomas, CH-5001 Aarau (CH); SENTKO, Anke, 77830 Bühlertal (DE); KOWALCZYK, Jörg, 67304 Eisenberg-Steinborn (DE)
(74) Vertreter: Schrell, Andreas
(86) Internationale Anmeldenummer: PCT/EP2003/007902
(87) Internationale Veröffentlichungsnummer: WO 2004/008870

(56) Entgegenhaltungen:
- EP-A- 0 449 332
- DE-A- 19 943 491
- PATENT ABSTRACTS OF JAPAN vol. 007, no. 108 (C-165), 11. Mai 1983 (1983-05-11) & JP 58 031961 A (MITSUI SEITOU KK), 24. Februar 1983 (1983-02-24)
- DATABASE WPI Section Ch, Week 198915 Derwent Publications Ltd., London, GB; Class B05, AN 1989-112222 XP002258688 -& JP 01 060360 A (MITSUI SEITO KK), 7. März 1989 (1989-03-07)
- PATENT ABSTRACTS OF JAPAN vol. 007, no. 252 (C-194), 9. November 1983 (1983-11-09) & JP 58 138355 A (MITSUI SEITOU KK), 17. August 1983 (1983-08-17)
- DATABASE WPI Section Ch, Week 200327 Derwent Publications Ltd., London, GB; Class D16, AN 2003-278602 XP002258689 & WO 03 017788 A (SHIN MITSUI SUGAR CO LTD), 6. März 2003 (2003-03-06)

## Beschreibung

Die vorliegende Erfindung betrifft Instant-Getränkppulver, insbesondere aromatisierte oder nicht-aromatisierte Instant-Schwarztee-, Instant-Grüntee- oder Instant-Oolongteepulver, aromatisierte oder nicht-aromatisierte Instant-Kräutertee-pulver und Instant-Früchteteepulver.

Granulierte Getränke, beispielsweise granulierte Fertig-Tees, enthalten als Trägerstoff sehr häufig Saccharose. Es hat sich jedoch herausgestellt, dass diese Produkte mit großen Nachteilen behaftet sind. In zahlreichen Untersuchungen wurde nachgewiesen, dass der Konsum von saccharosehaltigen Instant-Tees zu erheblichen Zahnschädigungen führen kann. So ist das bei Säuglingen und Kleinkindern auftretende Krankheitsbild des "Nursing Bottle-Syndroms" (NBS), das durch kariöse und parodontale Schädigungen des Milchgebisses, pathologische Veränderungen des Keimspektrums der Mundhöhle und chronische Entzündungszustände der Mundschleimhaut und des alveolären Kieferknochens geprägt ist, hauptsächlich auf das Dauernuckeln aus Saugerflaschen mit saccharosehaltigen Instant-Tees zurückzuführen (vgl. beispielsweise Behrendt et al., Monatsschr. Kinderheilk., 136 (1998), 30-33). Insbesondere aufgrund der nachgewiesenen Zahn- und Gebissschädigungen durch saccharosehaltige Getränke wurden saccharosefreie Instant-Tees mit Kohlenhydraten, wie Glucose oder Maltodextrinen als Trägerstoffe entwickelt. Jedoch führt auch der Konsum von Maltodextrin-haltigen Instant-Teeprodukten zu einer unkontrollierten Aufnahme von kariogenen Zuckern (Koch und Wetzel, Schweiz. Monatsschr. Zahnmed., 105 (1995), 907-912).

Auch wurden Instant-Tees auf Eiweißbasis entwickelt. Diese Instant-Tees sind zwar zuckerfrei, weisen jedoch ebenfalls eine Reihe von Nachteilen auf. So ist beispielsweise nicht abgeklärt, ob eine stete Zufuhr isolierter Eiweiße, zumal zwischen den Mahlzeiten, als gesundheitlich wünschenswert betrachtet werden kann. Ebenso ist nicht gesichert, ob durch die Zufuhr von Fremdeiweißen beispielsweise ein Allergierisiko für Babys entsteht.

Die im Stand der Technik bekannten Instant-Tees, insbesondere auf der Basis von Maltodextrinen und Eiweißen, sind daher hinsichtlich ihrer gesundheitlichen Unbedenklichkeit und ihrer Akariogenität noch verbesserungsfähig.

Die natürlich vorkommende reduzierende Disaccharid-Ketose Isomaltulose (6-O-α-D-Glucopyranosyl-Fructose; Palatinose) weist vorteilhafte akariogene Eigenschaften auf, da Isomaltulose von der menschlichen Mundflora kaum abgebaut wird. Isomaltulose wird lediglich von den Glucosidasen der menschlichen Dünndarmwand verzögert gespalten, wobei die resultierenden Abbauprodukte Glucose und Fructose resorbiert werden. Dies resultiert, verglichen zu schnell verdaulichen Kohlenhydraten, in einem langsamen Anstieg der Blutglucose. Isomaltulose benötigt im Unterschied zu schnell verdaulichen, hochglykämischen Lebensmitteln kaum Insulin zur Verstoffwechslung. Trotz der günstigen akariogenen Eigenschaften wird Isomaltulose im Gegensatz zu anderen Zuckeraustauschstoffen wie Mannit, Sorbit und Isomalt, oder Süßstoffen wie Cyclamat kaum als alleiniges Süßungsmittel in Lebensmitteln oder Getränken eingesetzt. Dies hängt insbesondere mit dem Geschmack von Isomaltulose, insbesondere aufgrund der erheblich geringeren Süßkraft im Vergleich zu Saccharose zusammen. Die Süßkraft von 10-%igen wässrigen Isomaltulose-Lösungen beträgt nur etwa 0,4 der Süßkraft von Zucker. Dazu kommt, dass Isomaltulose Reversions- und Maillard-Produkte bilden kann.

Isomaltulose (Palatinose) wird daher hauptsächlich als Ausgangsstoff zur Herstellung von Isomalt, eines nahezu äquimolaren Gemisches der Diastereomere 6-O-α-D-Glucopyranosyl-D-sorbit (1,6-GPS) und 1-O-α-D-Glucopyranosyl-D-mannit (1,1-GPM) eingesetzt. Als Süßungsmittel wird Isomaltulose aufgrund seiner geringen Süßkraft und des daraus resultierenden Geschmacks hauptsächlich in Kombination mit anderen Zuckeraustauschstoffen und/oder Süßstoffen in Lebensmitteln und/oder Getränken eingesetzt. Teilweise wird Isomaltulose auch eingesetzt, um den unangenehmen Geschmack anderer Lebensmittel zu überdecken. Aufgrund des erst im Dünndarmbereich erfolgenden verzögerten Isomaltulose-Abbaus wird Isomaltulose auch in speziellen Lebensmitteln oder Getränken für Sportler eingesetzt, um den oxidativen Metabolismus aufrechtzuerhalten.

Die Verwendung von Isomaltulose als Süßungsmittel in Kombination mit anderen Zuckeraustauschstoffen oder Süßstoffen wird beispielsweise in der WO 93/02566 beschrieben. Die WO 93/02566 beschreibt Schokoladenerzeugnisse, bei denen Zucker vollständig oder teilweise durch Produkte wie Inulin und Fructooligosaccharide ersetzt ist. Die Schokoladenzusammensetzung kann darüber hinaus Zuckeraustauschstoffe wie Xylit, Isomalt und/oder Isomaltulose enthalten.

Die DE 199 43 491 A1 beschreibt die Verwendung von Isomaltulose, Isomalt oder Isomalt-Varianten zur Herstellung eines Komprimates, wobei eine Agglomeration der beteiligten Komponenten herbeigeführt wird.

Die JP 1989-174093 beschreibt ein zur Herstellung von Lebensmitteln und Backwaren eingesetztes Süßungsmittelgemisch, das beispielsweise Isomaltulose beziehungsweise reduzierte Isomaltulose in Kombination mit Fructose enthält. Das Süßungsmittelgemisch kann beispielsweise zur Herstellung von Milcherzeugnissen, Schokolade, Kaugummi etc. eingesetzt werden.

Die JP 02234651 A2 beschreibt die Herstellung von antikariogenen Lebensmitteln und Getränken, wobei als Süßungsmittel ein Gemisch aus Palatinose und Palatinose-Honig, einem bei der Palatinose-Herstellung anfallenden Nebenprodukt, eingesetzt wird.

Die EP 390 438 B1 beschreibt ein Süßungsmittelgemisch, das Sucralose und Isomaltulose umfasst, wobei Sucralose und Isomaltulose synergistische Effekte zeigen. Das Süßungsmittelgemisch kann beispielsweise zur Herstellung von Getränken und Süßwaren eingesetzt werden.

In der JP 58031961 wird eine Süßungsmittelzusammensetzung beschrieben, die aus Isomaltulose und einem Süßungsmittelextrakt aus Stevia besteht. Die Intensität, der Nachgeschmack sowie die Stärke der Süße wird als vergleichbar mit derjenigen von Saccharose beschrieben. Die JP 01196258 A2 beschreibt Getränke, die coffeinfreien Tee/Kaffee, Tryptophan und/oder Valerian und Stärkehydrolysate enthaltendes Milchpulver umfassen. Als Beispiel wird ein coffeinfreier Instant-Kaffee beschrieben, der Tryptophan, Aspartam und Palatinose enthält.

Die JP 1060360 A beschreibt ein Sportgetränk, das Isomaltulose enthält. Als besonderer Vorteil dieses Getränks wird beschrieben, dass bei einem Verzehr vor einer sportlichen Betätigung die Blutzuckerkonzentration bei einem konstanten Wert gehalten werden kann und die Insulinkonzentration davon nicht beeinflusst wird.

Die JP 62091162 A beschreibt Aspartam-enthaltende Lebensmittel und Getränke, die gegebenenfalls Palatinose enthalten können.

Die JP 58138355 beschreibt einen Tafelzucker, der Isomaltulose sowie Aspartam enthält. Dieser Zucker zeichnet sich dadurch aus, dass der unangenehme metallisch bittere Geschmack des Aspartams durch die Verwendung von Isomaltulose verhindert wird. Dieser Tafelzucker kann in Getränken wie Kaffee oder Tee verwendet werden.

Die Verwendung von Isomaltulose in Lebensmitteln und Getränken zum Überdecken des unangenehmen Geschmackes bestimmter Lebensmittelbestandteile ist beispielsweise in der EP 0 809 939 A1 beschrieben. Die EP 0 809 939 A1 beschreibt einen Milchsäurebakterien und Bifidobakterien enthaltenden Joghurt, der raffiniertes Fischöl mit einem hohen Anteil ungesättigter Fettsäuren sowie einen Süßstoff, beispielsweise Palatinose enthält. Die Zugabe von Palatinose soll die Entwicklung des typischen Fisch-Geschmackes und Fisch-Geruches verhindern.

Die JP 63152950 A2 beschreibt die Herstellung von Gemüse-Gelee-Erzeugnissen unter Verwendung von Gemüsearten und einem Gelierungsmittel, wobei Palatinose und andere Zusätze wie Zimt eingesetzt werden, um den unangenehmen Geruch von Gemüsebestandteilen zu überdecken.

Die Verwendung von Isomaltulose zur Aufrechterhaltung des oxidativen Metabolismus ist beispielsweise in der japanischen ungeprüften Patentanmeldung Hei 11 (2000)-116754 beschrieben, die Lebensmittel und Getränke für Sportler betrifft, die Palatinose als Saccharid enthalten. Palatinose wird insbesondere in den Sportler-Lebensmitteln eingesetzt, um den oxitativen Metabolismus aufrecht zu erhalten.

Zusammengefasst zeigt sich, dass im Stand der Technik ein technisches Vorurteil gegen die Verwendung von Isomaltulose als alleiniges Süßungsmittel besteht und Isomaltulose daher im Falle einer Verwendung als Süßungsmittel hauptsächlich in Kombination mit Intensivsüßstoffen oder anderen Zuckeraustauschstoffen verwendet wird, jedoch nicht als alleiniges Süßungsmittel.

Das der vorliegenden Erfindung zugrunde liegende technische Problem liegt somit darin, Instant-Tees bereitzustellen, die die Nachteile der im Stand der Technik bekannten Instant-Tees überwinden, das heißt, die gesundheitlich unbedenklich sind und insbesondere keine von der Mundflora fermentierbaren Kohlenhydrate enthalten, die aber trotzdem einen angenehmen süßen Geschmack aufweisen und die bei Verarbeitung zu Instant-Getränken granulierbare oder pulverisierbare Produkte ergeben, die ohne weiteres wasserlöslich sind und auch bei kälteren Temperaturen rückstandslos in Lösung gehen.

Die vorliegende Erfindung löst das ihr zugrunde liegende technische Problem durch die Bereitstellung von Instant-Getränkepulvern, enthaltend ≥ 90 Gew.-%, bezogen auf die Gesamtmenge, Isomaltulose als Trägerstoff, ≤ 5 Gew.-%, bezogen auf die Gesamtmenge, Wasser und 0,1 Gew.-% bis 5 Gew.-%, bezogen auf die Gesamtmenge, Extrakt aus Pflanzen und/oder Pflanzenteilen und 0,1 Gew.-% bis 5 Gew.-%, bezogen auf die Gesamtmenge, Harnstoff oder ein Derivat davon als puffernden Zusatz.

Erfindungsgemäß wurde überraschenderweise festgestellt, dass Instant-Tees, die Isomaltulose als alleiniges Süßungsmittel und als alleinigen Trägerstoff enthalten, nach Auflösung in Wasser überraschenderweise einen äußerst angenehmen süßen Geschmack aufweisen, ohne dass ein weiterer Süßstoff oder Zuckeraustauschstoff zugesetzt werden muss. Die unter Verwendung der erfindungsgemäßen Instant-Getränkepulver hergestellten trinkfertigen Tees oder Tee-ähnlichen Erzeugnisse führen darüber hinaus in vorteilhafter Weise nicht zu den bekannten Schädigungen der Zähne und des Gebisses, da sie im Gegensatz zu den im Stand der Technik bekannten Instant-Teegetränken keine Kohlenhydrate enthalten, die von der Mundflora fermentiert werden können. Darüber hinaus führen die erfindungsgemäß zugesetzten puffernden Zusätze, nämlich Harnstoff oder ein Derivat davon, überraschenderweise zu einer Verstärkung des süßen Isomaltulose-Geschmacks. Gleichzeitig tragen sie in erheblichem Maße zu den vorteilhaften zahnschonenden Eigenschaften der erfindungsgemäßen Instant-Getränke bei, da sie in der Mundhöhle eine Absenkung des pH-Wertes unter den kritischen Wert von 5,7 verhindern können. Die Verwendung von Isomaltulose als Trägerstoff weist auch technologische Vorteile, insbesondere bei der Herstellung der erfindungsgemäßen Instant-Getränkepulver auf. Da Isomaltulose nicht hygroskopisch ist, lassen sich problemlos nicht-verklumpende rieselfähige Instant-Getränkepulver in Pulver- oder Granulatform herstellen. Aufgrund der guten Löslichkeit von Isomaltulose in Wasser lassen sich die erfindungsgemäßen Instant-Getränkepulver auch bei kalten Temperaturen rasch und rückstandsfrei in Wasser lösen und ergeben so schnell trinkfertige Tees oder teeähnliche Getränke. Die Verwendung von Isomaltulose als Trägerstoff ist darüber hinaus sehr kostengünstig, da Isomaltulose preiswert aus Saccharose hergestellt werden kann.

Im Zusammenhang mit der vorliegenden Erfindung werden unter "Instant-Getränkeputvern" in Wasser rasch und rückstandslos lösliche Produkte für den Nahrungs- und Heilmittelbereich verstanden, die insbesondere als Pulver, aber auch als Granulate vorliegen. Die Herstellung der Instant-Getränkepulver erfolgt beispielsweise durch Vermischen eines oder mehrerer Extrakte von Pflanzenteilen und/oder Pflanzen mit einem pulverförmigen Trägerstoff, wobei insbesondere pulverförmige, aber auch granulierte rieselfähige Produkte erhalten werden.

Erfindungsgemäß ist also die Verwendung von Isomaltulose als Trägerstoff der erfindungsgemäßen Instant-Getränkepulver vorgesehen. Im Zusammenhang mit der vorliegenden Erfindung wird unter einem "Träger" oder "Trägerstoff" ein chemischer Stoff verstanden, der als Unterlage und/oder Gerüst für die Stoffe dient, die die typischen geschmacks-, geruchs- und farbgebenden Eigenschaften von Tees oder Tee-ähnlichen Erzeugnissen hervorrufen. Der Trägerstoff dient darüber hinaus als Süßungsmittel der erfindungsgemäßen Instant-Getränkepulver. "Isomaltulose" ist eine Dissaccharid-Ketose, die natürlicherweise vorkommt, beispielsweise in Honig. Isomaltulose wird aus reinen oder während der Zuckerfabrikation anfallenden Saccharose-Lösungen durch Transglucosidierung der Saccharose zu Isomaltulose unter Verwendung lebender oder toter Zellen von Protaminobacter rubrum oder daraus gewonnener Enzymextrakte herstellen. Isomaltulose kristallisiert in Form eines Monohydrats. Die Löslichkeit von Isomaltulose in Wasser beträgt 0,49 g wasserfreie Isomaltulose pro g Wasser.

Unter einem "Extrakt" aus Pflanzen und/oder Pflanzenteilen wird ein durch Wasserentzug eines wässrigen Pflanzen-Auszuges hergestelltes Produkt verstanden. Zur Herstellung von Tee-Extrakten, das heißt Extrakten aus Pflanzenteilen des Teestrauches Camellia sinensis L.O. Kuntze aus der Familie der Teegewächse, werden beispielsweise Verfahren wie Ultrafiltrationen und umgekehrte Osmose mit anschließender Sprühtrocknung verwendet. Die bei der Kaffee-Extrakt-Gewinnung übliche Gefrierkonzentrierung kann auf Grund der Abscheidung von Polyphenol-Komplexen nicht zur Herstellung von Tee-Extrakten eingesetzt werden. Tee-Extrakte beziehungsweise andere pflanzliche Extrakte weisen maximale Wassergehalte von 6 % und maximale Aschegehalte von 20 % auf.

In einer bevorzugten Ausführungsform der vorliegenden Erfindung handelt es sich bei dem erfindungsgemäßen Instant-Getränkepulver um ein Instant-Teepulver. Erfindungsgemäß wird unter einem "Instant-Teepulver" ein Pulver verstanden, das einen entsprechend herkömmlichen Verfahren gewonnenen Extrakt aus Pflanzenteilen, insbesondere Blättern, Blattknospen und zarten Stielen des Teestrauches Camellia sinensis L.O. Kuntze aus der Familie der Teegewächse (Theaceen), umfasst und das zur Herstellung eines trinkfertigen Tees verwendet wird.

In einer bevorzugten Ausgestaltung der Erfindung umfasst das erfindungsgemäße Instant-Teepulver einen Extrakt aus schwarzem Tee. Unter "schwarzem Tee" wird fermentierter Tee verstanden, dessen Blätter entsprechend den zur Herstellung von schwarzem Tee üblichen Verfahren wie Welken, Rollen, Fermentieren, Zerkleinern und Trocknen bearbeitet sind. Die vorliegende Erfindung stellt somit ein Instant-Schwarzteepulver bereit.

In einer weiteren bevorzugten Ausgestaltung der Erfindung ist vorgesehen, dass das erfindungsgemäße Instant-Teepulver einen Extrakt aus Oolongtee umfasst. Im Zusammenhang mit der vorliegenden Erfindung wird unter "Oolongtee" ein halbfermentierter Tee verstanden, dessen Blätter nach den üblichen Verfahren wie Welken und Rollen fermentiert werden, wobei die Fermentation etwa nach Ablauf der Hälfte der üblichen Zeit abgebrochen wird und eine Trocknung erfolgt. Die vorliegende Erfindung stellt somit auch ein Instant-Oolongteepulver bereit.

Eine weitere bevorzugte Ausgestaltung der Erfindung betrifft ein Instant-Teepulver, das einen Extrakt aus grünem Tee enthält. Unter "grünem Tee" wird ein unfermentierter Tee verstanden, dessen Blätter blanchiert, gerollt und getrocknet werden und dessen natürlicher Blattfarbstoff daher weitgehend erhalten bleibt. Die vorliegende Erfindung stellt somit auch ein Instant-Grünteepulver bereit.

Erfindungsgemäß werden auch aromatisierte Instant-Teepulver, insbesondere aromatisierte Instant-Grünteepulver, aromatisierte Instant-Schwarzteepulver und aromatisierte Instant-Oolongteepulver bereitgestellt.

In bevorzugter Ausgestaltung der Erfindung ist vorgesehen, dass die erfindungsgemäßen Instant-Teepulver zur Aromatisierung zusätzliche natürliche oder naturidentische Geruch- und/oder Geschmackstoffe enthalten. Unter "Geruch- oder Geschmackstoffen" werden erfindungsgemäß Aromen verstanden, also Substanzen oder Substanzgemische, die dazu bestimmt sind, Lebensmitteln oder Getränken, insbesondere Tee-Pulvern einen besonderen Geruch oder Geschmack zu verleihen. "Natürliche" aromatisierende Geruch- und Geschmacksstoffe sind Substanzen oder Substanzgemische, die aus natürlichen Quellen beispielsweise Pflanzen oder Pflanzenteilen, zum Beispiel Früchten oder Samen, gewonnen und gegebenenfalls aufgereinigt werden, wobei, falls es sich bei den natürlichen Quellen um Pflanzen oder Pflanzenteile handelt, diese nicht vom Teestrauch Camellia sinensis L.O. Kuntze stammen. Selbstverständlich können die zur Aromatisierung verwendeten Geruch- und/oder Geschmackstoffe auch synthetisch hergestellt worden sein, d.h. zur Aromatisierung können auch synthetisch hergestellte naturidentische Geruch-und/oder Geschmackstoffe eingesetzt werden.

Erfindungsgemäß ist also vorgesehen, dass die erfindungsgemäßen Instant-Teepulver zusätzlich mit aromatisierenden Geruch- und/oder Geschmackstoffe versetzt werden. Erfindungsgemäß ist es beispielsweise möglich, das hergestellte Instant-Teepulver selbst, also das den Trägerstoff und einen Tee-Extrakt enthaltende Gemisch, mit den aromatisierenden natürlichen oder naturidentischen Geruch-und/oder Geschmackstoffen zu versetzen. Erfindungsgemäß besteht aber auch die Möglichkeit, die aromatisierenden Geruch- und/oder Geschmackstoffe zunächst dem Tee-Extrakt zuzugeben und dann den so aromatisierten Tee-Extrakt zur Herstellung der erfindungsgemäßen aromatisierten Instant-Teepulver zu verwenden.

In einer weiteren Ausgestaltung der Erfindung ist vorgesehen, dass die erfindungsgemäßen Instant-Teepulver aromatisiert werden, indem ein Tee-Extrakt zur Herstellung der Instant-Teepulver verwendet wird, der aus einem Tee gewonnen wurde, dem zur Aromatisierung aromagebende Fruchtsäfte, geruch- und/oder geschmackgebende Pflanzen oder Pflanzenteile oder aromagebende Trinkbranntweine, beispielsweise Whisky, Arrak oder Rum, zugesetzt wurden.

In einer weiteren bevorzugten Ausführungsform der vorliegenden Erfindung handelt es sich bei den erfindungsgemäßen Instant-Getränkepulvern um Instant-Kräuterteepulver. Im Zusammenhang mit der vorliegenden Erfindung wird unter einem "Instant-Kräuterteepulver" ein Pulver verstanden, das einen entsprechend herkömmlichen Verfahren gewonnenen Extrakt aus Pflanzen, die keine Vertreter der Familie der Teegewächse (Theaceen) sind, und/oder Pflanzenteilen davon, insbesondere Blättern, Blattknospen, Stielen, Blüten, Samen oder Wurzeln, enthält und das zur Herstellung eines trinkfertigen teeähnlichen Getränkes verwendet wird.

Die erfindungsgemäßen Instant-Kräuterteepulver enthalten vorzugsweise einen Extrakt aus Anis, Baldrianwurzel, Brennnessel, Brombeerblättern, Erdbeerblättern, Fenchel, Frauenmantel, Gänsefingerkraut, Ginseng, Hagebutte, Heidelbeerblättern, Hibiskusblüten, Himbeerblättern, Holunder, Hopfen, Ingwer, Johannisbeerblättern, Johanniskraut, Kamille, Koriander, Krauseminze, Lapacho-Pflanze, Lavendel, Lemon-Gras, Lindenblüten, Löwenzahn, Majoran, Malve, Mannstreu, Mate-Pflanze, Melisse, Mistel, Pfefferminze, Pfingstrose, Ringelblume, Rosmarin, Rotbusch, Schafgarbe, Spitzwegerich, Thymian, Verbenen, Weißdorn, Ysop, Zimt und/oder Teilen davon. Erfindungsgemäß ist vorgesehen, dass die Instant-Kräuterteepulver Extrakte einer einzigen Pflanzenart enthalten können. Bei den erfindungsgemäßen Instant-Kräuterteepulvern kann es sich also beispielsweise um Instant-Pfefferminzteepulver, Instant-Hagebuttenteepulver, Instant-Fencheltee-pulver, Instant-Johanniskrautteepulver oder Instant-Kamillenteepulver handeln, also Teepulver, die zur Herstellung von trinkfertigem Pfefferminztee, trinkfertigem Hagebuttentee, trinkfertigem Fencheltee, trinkfertigem Johanniskrauttee oder trinkfertigem Kamillentee eingesetzt werden. Erfindungsgemäß besteht aber auch die Möglichkeit, dass die Instant-Kräuterteepulver Extrakte aus mindestens zwei Pflanzenarten enthalten können.

Eine weitere bevorzugte Ausführungsform der Erfindung betrifft aromatisierte Instant-Kräutertee-pulver. In einer bevorzugten Ausgestaltung umfasst das aromatisierte Instant-Kräuterteepulver neben dem entsprechenden Pflanzen-Extrakt zusätzlich natürliche oder naturidentische Geruch- oder Geschmackstoffe. In einer weiteren bevorzugten Ausgestaltung der Erfindung umfasst das aromatisierte Instant-Kräuterteepulver einen Extrakt, der aus Pflanzen oder Pflanzenteilen gewonnen wurde, denen vor der Extraktion zur Aromatisierung beispielsweise aromagebende Fruchtsäfte zugesetzt wurden.

In einer weiteren bevorzugten Ausführungsform der Erfindung handelt es sich bei den erfindungsgemäßen Instant-Getränkepulvern um Instant-Früchteteepulver. Im Zusammenhang mit der vorliegenden Erfindung wird unter einem "Instant-Früchteteepulver" ein Pulver verstanden, das einen entsprechend herkömmlichen Verfahren gewonnenen Extrakt aus Früchten und/oder natürliche oder naturidentische Fruchtaromen enthält und das zur Herstellung eines teeähnlichen Getränkes mit Fruchtgeschmack verwendet wird. In bevorzugter Ausgestaltung enthält das erfindungsgemäße Instant-Früchteteepulver einen Extrakt aus Früchten wie Äpfeln, Ananas, Birnen, Orangen, Grapefruit, Limonen, Passionsfrüchten, Pfirsichen, Sanddorn-Beeren, Zitronen usw.

Eine weitere bevorzugte Ausgestaltung der Erfindung betrifft Instant-Früchteteepulver, enthaltend ≥ 90 Gew.-%, bezogen die Gesamtmenge, Isomaltulose als Trägerstoff, ≤ 5 Gew.-%, bezogen auf die Gesamtmenge, Wasser und 0,1 Gew.-% bis 5 Gew.-%, bezogen auf die Gesamtmenge, natürliche oder naturidentische Fruchtaromen und 0,1 Gew.-% bis 5 Gew.-%, bezogen auf die Gesamtmenge, Harnstoff oder ein Derivat davon. Das heißt die vorliegende Erfindung betrifft ein Instant-Früchteteepulver, das ausschließlich auf der Basis von insbesondere synthetisch hergestellten Fruchtaromen, aber ohne einen Frucht-Extrakt hergestellt wird.

Gemäß der Erfindung ist vorgesehen, dass die erfindungsgemäßen Instant-Getränkepulver Harnstoff oder ein Derivat davon als puffernden Zusatz enthalten. Im Zusammenhang mit der vorliegenden Erfindung werden unter "puffernden Zusätzen insbesondere Verbindungen verstanden, die bei Konsum der unter Verwendung der erfindungsgemäßen Instant-Getränkepulver hergestellten Teegetränke oder teeähnlichen Getränke insbesondere in der Mundhöhle eine Absenkung des pH-Wertes in den sauren Bereich verhindern, wobei vorzugsweise ein pH-Wert von mindestens 5,7 aufrechterhalten wird. Vorteilhafterweise tragen die erfindungsgemäßen puffernden Zusätze also in erheblichem Maße zu den vorteilhaften zahnschonenden Eigenschaften der erfindungsgemäßen Instant-Getränke bei. Die erfindungsgemäß eingesetzten puffernden Zusätze verstärken darüber hinaus den angenehmen süßen Geschmack des erfindungsgemäß eingesetzten Trägermittels Isomaltulose.

Gemäß der Erfindung werden Harnstoff oder ein Derivat davon als puffernder Zusatz verwendet, wobei die Instant-Getränkepulver 0,1 Gew.-% bis 5 Gew.-% Harnstoff oder ein Derivat davon enthalten. Die harnstoffhaltigen Instant-Getränkepulver zeichnen sich durch einen besonders süßen Geschmack aus, das heißt Harnstoff oder ein Derivat davon verstärken die Süßkraft der Palatinose in vorteilhafter Weise.

Gemäß der Erfindung werden Harnstoff oder ein Derivat von Harnstoff als puffernder Zusatz verwendet zur Herstellung von Isomaltulose-haltigen Instantgetränkepulvern, die ≥ 90 Gew.-%, bezogen auf die Gesamtmenge, Isomaltulose als Trägerstoff, ≤ 5 Gew.-%, bezogen auf die Gesamtmenge, Wasser und 0,1 Gew.-% bis 5 Gew.-%, bezogen auf die Gesamtmenge, Extrakt aus Pflanzen und/oder Pflanzenteilen oder 0,1 Gew.-% bis 5 Gew.-%, bezogen auf die Gesamtmenge, natürliche oder naturidentische Fruchtaromen enthalten.

Erfindungsgemäß ist ebenfalls vorgesehen, dass die erfindungsgemäßen Instant-Getränkepulver Fließhilfsmittel enthalten. Unter einem "Fließhilfsmittel" oder "Fließmittel" werden sogenannte Rieselhilfen verstanden, die beispielsweise bei klebrigen oder stockenden Pulvern deren freies Fließen bewirken. Vorzugsweise handelt es sich bei dem erfindungsgemäß verwendeten Fließhilfsmittel um Siliciumdioxid.

Erfindungsgemäß ist ebenfalls vorgesehen, dass die Instant-Getränkepulver darüber hinaus natürliche und/oder synthetische Farbstoffe enthalten können. Bei den natürlichen Farbstoffen kann es sich beispielsweise um Farbstoffe pflanzlicher Herkunft, wie Carotinoide, Flavonoide und Anthocyane, Farbstoffe tierischer Herkunft wie Cochenille, anorganische Pigmente wie Titandioxid, EisenoxidPigmente und Eisenhydroxid-Pigmente handeln. Als natürliche Farbstoffe können ebenfalls sekundär gebildete Farbstoffe wie die Produkte der enzymatischen Bräunung, beispielsweise Polyphenole und Produkte der nicht-enzymatischen Bräunung wie Melanoidine eingesetzt werden. Erfindungsgemäß ist ferner vorgesehen, dass als natürliche Farbstoffe Erhitzungsprodukte, zum Beispiel Karamele und Zuckercouleur eingesetzt werden können. Für die erfindungsgemäßen Instant-Getränkepulver können darüber hinaus synthetische Farbstoffe wie Azo-, Triphenylmethan-, Indigoid-, Xanthen- und Chinolin-Verbindungen eingesetzt werden. Vorzugsweise sind die erfindungsgemäß verwendeten synthetischen Farbstoffe in besonderem Maße wasserlöslich.

Erfindungsgemäß können die erfindungsgemäßen Instant-Getränkepulver zusätzlich mit natürlichen oder synthetischen Vitaminen ausgewählt aus der Gruppe bestehend aus Vitamin A, Vitamin B₁, Vitamin B₂, Vitamin B₃, Vitamin B₅, Vitamin B₆, Vitamin B₁₂, Vitamin B-Komplex, Vitamin C, Vitamin D, Vitamin E, Vitamin F und Vitamin K angereichert sein. Die erfindungsgemäßen Instant-Getränkepulver können darüber hinaus zusätzliche Mineralstoffe und Spurenelemente enthalten. Erfindungsgemäß ist ebenfalls vorgesehen, dass die Instant-Getränkepulver auch Intensivsüßstoffe wie Saccharin, Saccharin-Na, Saccharin-K, Saccharin-Ca, Natriumcyclamat, Calciumcyclamat, Acesulfam-K, Aspartam, Dulcin, Steviosid und Neohesperidindihydrochalkon enthalten.

Die auf der Basis der erfindungsgemäßen Instant-Getränkepulver hergestellten Teegetränke beziehungsweise teeähnlichen Getränke wie Kräutertee oder Früchtetee, zeichnen sich in vorteilhafter Weise dadurch aus, dass sie im Gegensatz zu den im Stand der Technik bekannten Kohlenhydrat-haltigen Instant-Teegetränken bei Konsum in der Mundhöhle nicht oder höchstens kurzzeitig zu einer pH-Wert-Absenkung in den für die Zahnschädigung bedeutsamen Bereich unterhalb von 5,7 führen, wie mittels Verfahren der Plaque-pH-Telemetrie bestimmt. Die intraorale Plaque-pH-Telemetrie (Graf und Mühlemann, J. Dent. Res., 44 (1965), 1039; Graf und Mühlemann, Helv. Odont. Acta, 10 (1966), 94) ist die einzige in vivo-Methode, die eine schnelle und zuverlässige Messung der H⁺-Ionen-Konzentration unter eine ungestörten Plaque auf der Höhe der Schmelzoberfläche der Zähne ermöglicht. Das Verfahren gestattet es daher, den pH-Wert beziehungsweise dessen Veränderung im plaquebelegtem Interdentalraum und in der Mundflüssigkeit während und nach ungestörter Einnahme von Getränken oder Nahrungsmitteln laufend zu verfolgen. Die erfindungsgemäßen Instant-Getränkepulver auf der Basis von Isomaltulose als Trägerstoff sind aufgrund der vorgenommenen pH-telemetrischen Bestimmungen als zahnschonend beziehungsweise im Bereich zahnschonender Produkte, also als zahnfreundlich einzuordnen. Die erfindungsgemäß zahnschonenden Eigenschaften werden erfindungsgemäß durch den Zusatz von Harnstoff oder einem Derivat davon verstärkt.

Die Erfindung wird anhand der folgenden Figuren und Beispiele näher erläutert.

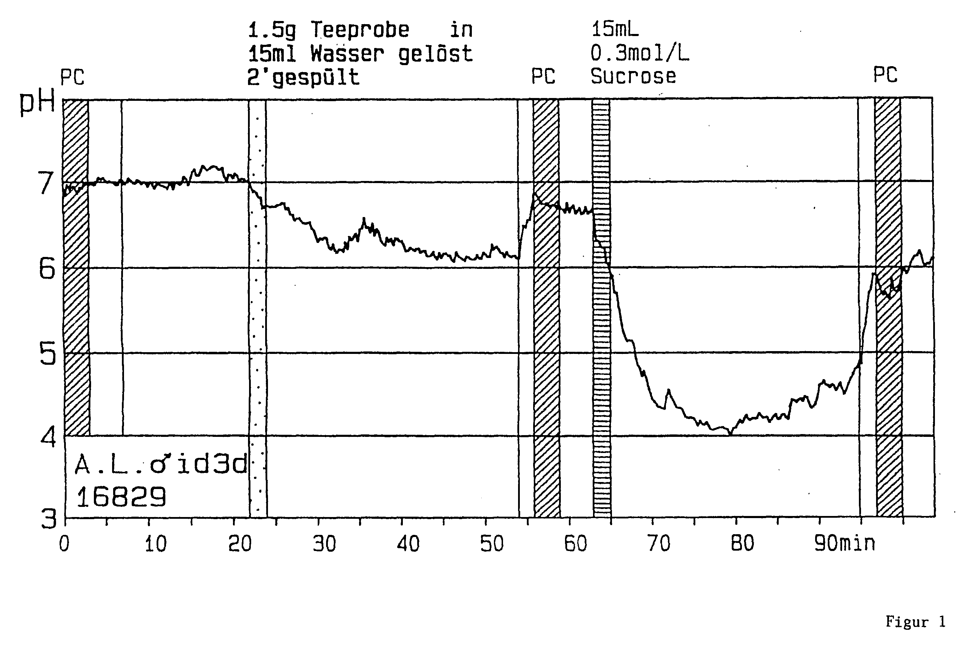

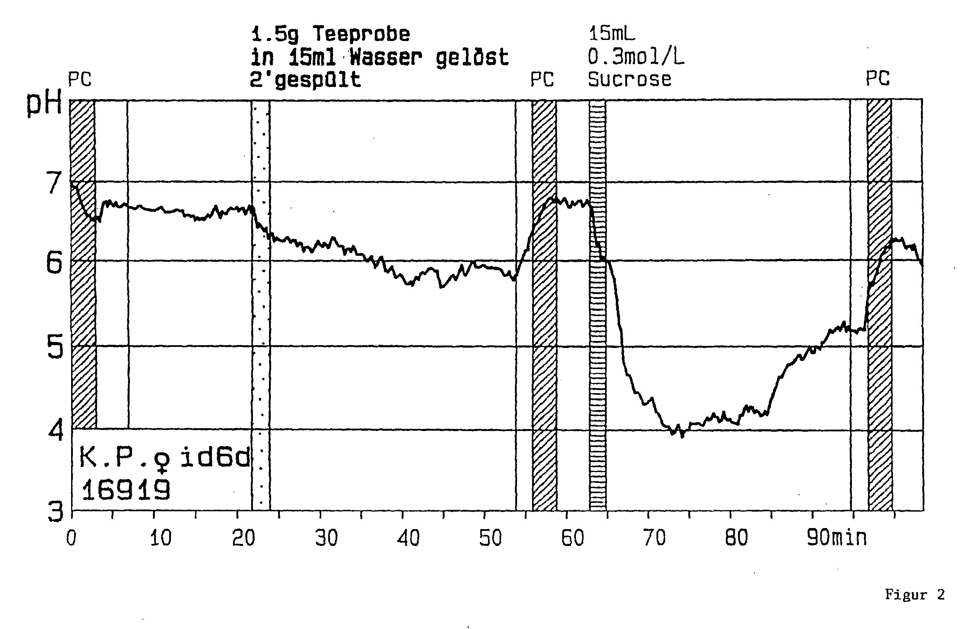

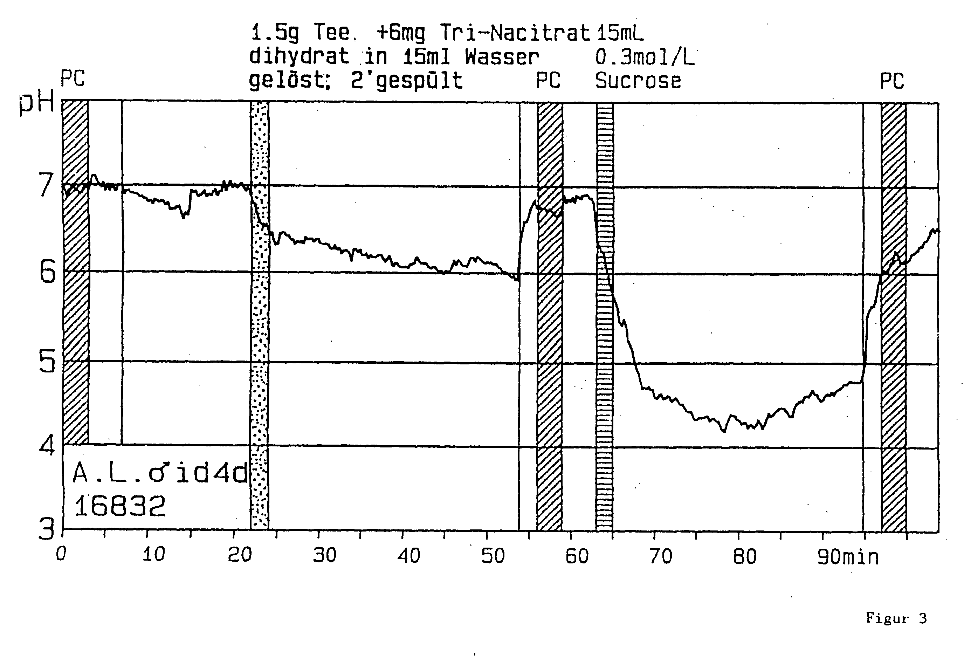

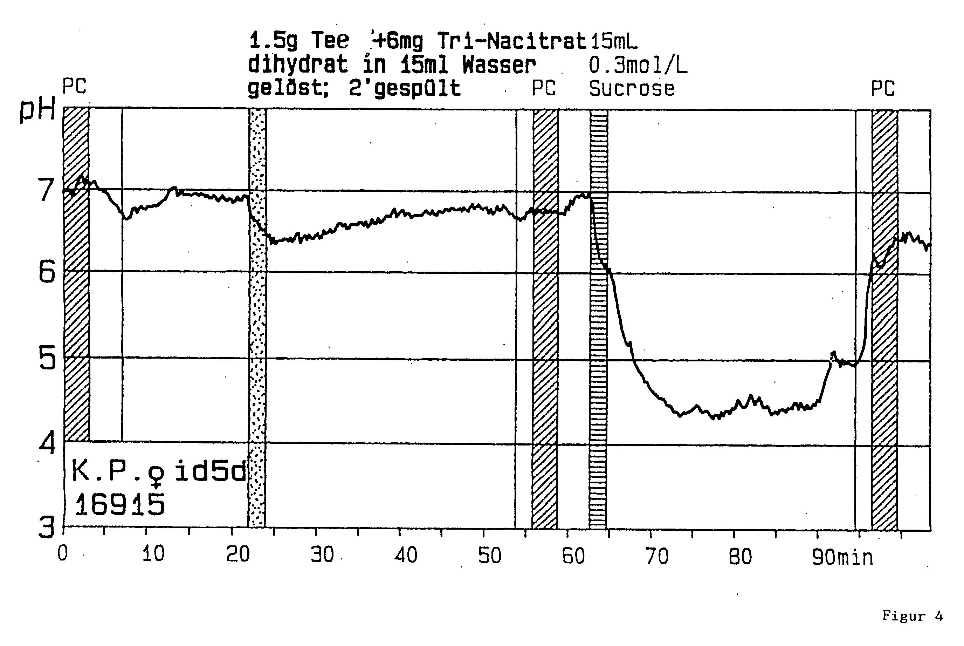

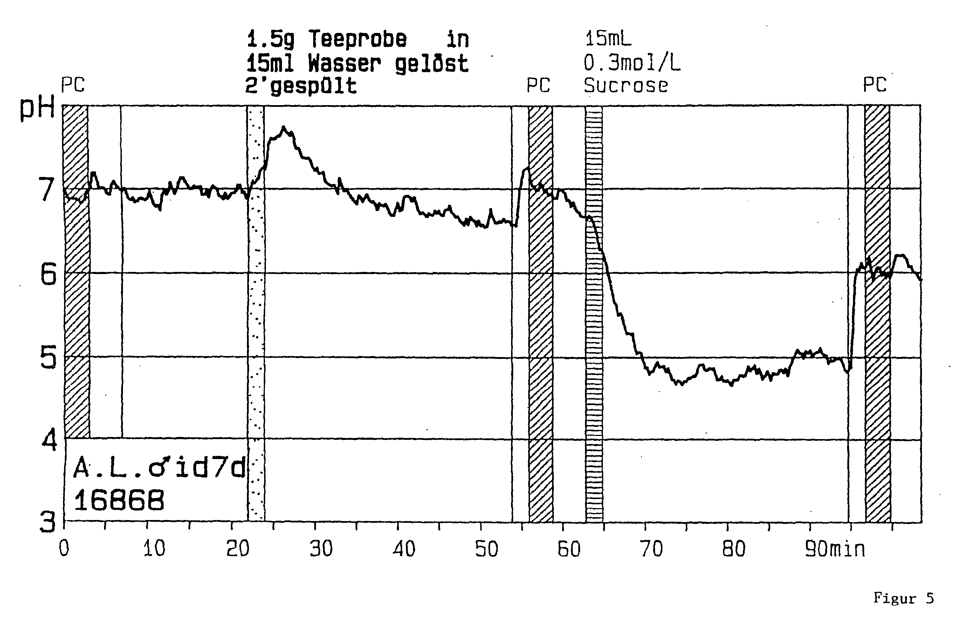

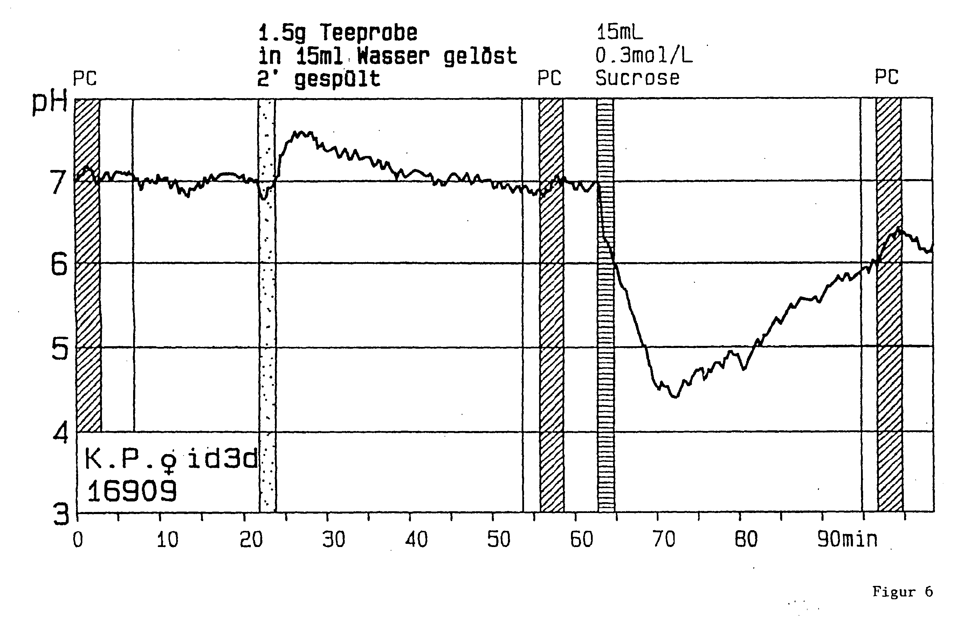

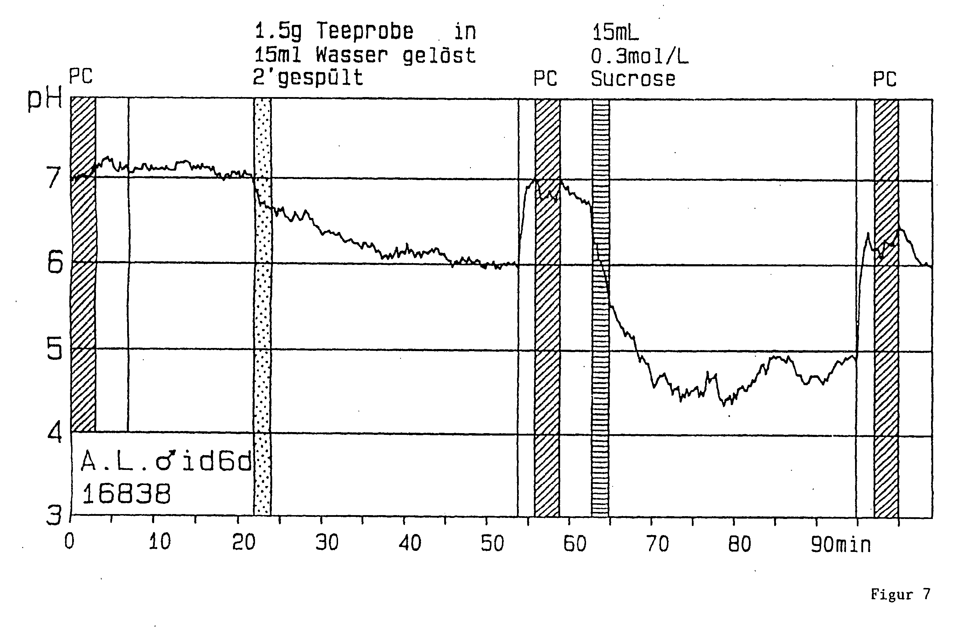

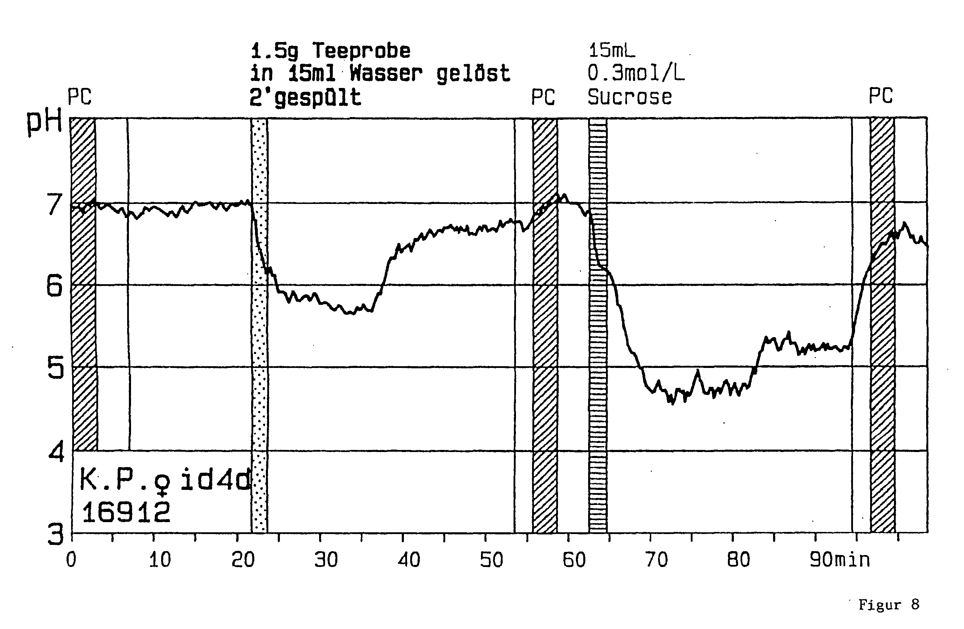

Die Figuren 1 bis 8 zeigen telemetrisch gemessene pH-Werte von verschieden alten Interdentalplaques bei Probanden während und 30 Min. nach dem Spülen mit 15 ml der getesteten erfindungsgemäßen Instant-Tees sowie während und 30 Min. nach dem Spülen mit 15 ml einer 0,3 mol/l (10 %) Saccharoselösung. (PC) = Paraffinkauen, (Sucrose) = Saccharose, (id) = Alter der Interdentral-Plaque in Tagen.
- Figur 1: zeigt den Einfluss eines Instant-Fencheltees ohne Zusatz von Harnstoff auf den pH-Wert in der Mundhöhle eines Probanden.
- Figur 2: zeigt den Einfluss eines Instant-Fencheltees ohne Zusatz von Harnstoff auf den pH-Wert in der Mundhöhle eines Probanden.
- Figur 3: zeigt den Einfluss eines Instant-Fencheltees mit Citrat als puffernden Zusatz auf den pH-Wert in der Mundhöhle eines Probanden.
- Figur 4: zeigt den Einfluss eines Instant-Fencheltees mit Citrat als puffernden Zusatz auf den pH-Wert in der Mundhöhle eines Probanden.
- Figur 5: zeigt den Einfluss eines erfindungsgemäßen Instant-Fencheltees mit Harnstoff-Zusatz auf den pH-Wert in der Mundhöhle eines Probanden.
- Figur 6: zeigt den Einfluss eines erfindungsgemäßen Instant-Fencheltees mit Harnstoff-Zusatz auf den pH-Wert in der Mundhöhle eines Probanden.
- Figur 7: zeigt den Einfluss eines Instant-Grüntees ohne puffernde Zusätze auf den pH-Wert in der Mundhöhle eines Probanden.
- Figur 8: zeigt den Einfluss eines Instant-Grüntees ohne puffernde Zusätze auf den pH-Wert in der Mundhöhle eines Probanden.
- Figur 9: zeigt die telemetrisch gemessenen pH-Werte von verschieden alten Interdentalplaques eines Probanden während und 15 Min. nach dem Spülen mit einem erfindungsgemäßen Instant-Fencheltee mit Harnstoff-Zusatz, während und 15 Min. nach dem Spülen mit einem Instant-Fencheltee mit Trinatriumcitrat-dihydrat-Zusatz sowie während und 30 Min. nach dem Spülen mit 15 ml einer 0,3 mol/l (10 %) Saccharose-Lösung (PC) = Parafin-Kauen, (Sucrose) = Saccharose, (id) = Alter der Interdentalplaque in Tagen.
- Figur 10: zeigt die telemetrisch gemessenen pH-Werte von verschieden alten Interdentalplaques eines Probanden während und 15 Min. nach dem Spülen mit einem Instant-Fencheltee ohne puffernde Zusätze, während und 15 Min. nach dem Spülen mit einem Instant-Fencheltee mit Trinatriumcitrat-dihydrat-Zusatz sowie während und 30 Min. nach dem Spülen mit 15 ml einer 0,3 mol/l (10%) Saccharose-Lösung, (PC) = Parafin-Kauen, (Sucrose) = Saccharose, (id) = Alter der Interdentalplaque in Tagen.

### Beispiel 1: Formulierungen von Isomaltulose-Tee

1.1 Früchtetee (nicht erfindungsgemäß)

| | |
|---|---|
| 90,0 % | Isomaltulose |
| 8,0 % | Aromen (z.B. Mango-Maracuja,Himbeere, Johannisbeere, Heidelbeere) |
| 1,0 % | Äpfelsäure |
| 0,5 % | Schwarztee-Extrakt (z.B. entcoffeiniert) |
| 0,5 % | Hibiscusblüten-Extrakt |

1.2 Früchtetee mit Harnstoff

| | |
|---|---|
| 90,0 % | Isomaltulose |
| 8,0 % | Aromen (z.B. Mango-Maracuja, Himbeere, Johannisbeere, Heidelbeere) |
| 1,0 % | Äpfelsäure |
| 0,5 % | Schwarztee-Extrakt (z.B. entcoffeiniert) |
| 0,5 % | Hibiscusblüten-Extrakt |
| 0,1 % | Harnstoff |

1.3 Fencheltee (nicht erfindungsgemäß)

| | |
|---|---|
| 93,0 % | Isomaltulose |
| 7,0% | Fenchel-Extrakt |

1.4 Fencheltee mit Harnstoff

| | |
|---|---|
| 93,0 % | Isomaltulose |
| 7,0 % | Fenchel-Extrakt |
| 0,1 % | Harnstoff |

1.5 Fencheltee mit Natriumcirat (nicht erfindungsgemäß)

| | |
|---|---|
| 93,0 % | Isomaltulose |
| 7,0 % | Fenchel-Extrakt |
| 0,5 % | Natriumcitrat |

1.6 Kräutertee (nicht erfindungsgemäß)

| | |
|---|---|
| 96,0 % | Isomaltulose |
| 4,0 % | Kräutermischung |

1.7 Grüntee (nicht erfindungsgemäß)

| | |
|---|---|
| 92,0 % | Isomaltulose |
| 8,0 % | Grüntee-Extrakt |

1.8 Grüntee mit Harnstoff

| | |
|---|---|
| 92,0 % | Isomaltulose |
| 8,0 % | Grüntee-Extrakt |
| 0,02 % | Harnstoff |

1.9 Zitronen-Tee (nicht erfindungsgemäß)

| | |
|---|---|
| 95,5 % | Isomaltulose |
| 1,0 % | Schwarztee-Extrakt (z.B. entcoffeiniert) |
| 1,5% | Citronensäure |
| 1,0 % | Aroma + Saftpulver |
| 1,0 % | Vitamin C |

### Beispiel 2: Einfluss von erfindungsgemäßen Instant-Getränkepulvern auf den pH-Wert in der Mundhöhle

Unter Verwendung von Verfahren der Plaque-pH-Telemetrie wurde bei Patienten mit herausnehmbarer Zahnprothese der Einfluss von erfindungsgemäßen Instant-Getränkepulvern auf den pH-Wert in der Mundhöhle bestimmt. Das Verfahren erlaubt, eine eventuelle Säureneutralisation durch die Mundflüssigkeit und durch alkalinisierende Produktzusätze während der pH-Bestimmung zu verfolgen. Die telemetrischen Messungen dienen daher der Abklärung, ob insbesondere Fertigprodukte in der Mundflora vergärt werden können und ob es deshalb während oder nach dem Genuss davon zu einer kritischen Ansäuerung der Plaque unter einen pH-Wert von 5,7 kommt. Ist dies nicht der Fall, so können die getesteten Produkte als zahnschonend oder zahnfreundlich angesehen werden. Falls diätetische Säuren den pH-Wert während des Genusses eines Testproduktes unter 5,7 senken, wird eine Auswertung in µmol H⁺ x Min/L durchgeführt, um eine mögliche erosive Schädigung der Zahnhartsubstanz zu prüfen. Wird der kritische Wert von 40 µmol H⁺ x Min/L während des Verzehrs nicht überschritten, so kann eine mögliche Erzeugung von Zahn-Erosionen ausgeschlossen werden. Wird dieser Wert überschritten, so kann das Produkt trotz des Ersatzes von vergärbarem Zucker durch Zuckeraustauschstoffe wegen der Gefahr der Auslösung von Erosionen am Zahnschmelz nicht als zahnschonend bezeichnet werden.

Die Untersuchungen wurden bei vier Patienten durchgeführt. Alle Probanden besaßen eine Unterkiefer-Telemetrieprothese mit je einer in einen Interproximalraum eingebauten Miniatur-pH-Glaselektrode. Die Testprothesen wurden gereinigt eingesetzt und die Probanden wurden angewiesen, während der Testdauer ihre normalem Essgewohnheiten beizubehalten, sich jedoch jeglicher Mundhygiene zu enthalten. Die Nichtentfernung der Prothesen erlaubte ein ungestörtes Plaque-Wachstum auf den Membran-Oberflächen der interdental eingebauten Elektroden. Die pH-Tests erfolgten entsprechend dem von Imfeld beschriebenen Verfahren (Imfeld, in: Proceedings of a workshop on saliva-dental plaque and enamel surface interactions (Herausgeber Frank und Leach), (1982), 143-156, IRL Press Ltd. London).

Insbesondere wurden Instant-Fencheltees ohne puffernde Zusätze, erfindungsgemäße Instant-Fencheltees mit Harnstoff-Zusatz, Instant-Fencheltees mit tri-Natriumcitrat-dihydrat-Zusatz und Instant-Grüntee ohne puffernde Zusätze getestet. Die Teeproben wurden wie folgt zubereitet. Jeweils 1,5 g Instant-Getränkepulver wurden in 15 ml warmes Wasser eingerührt und im Kühlschrank bei 15°C bis zum Konsum aufbewahrt. Teeproben mit tri-Natriumcitrat-dihydrat-Zusatz wurden durch Mischen von 1,5 g Pulver und 6 mg tri-Natriumcitrat-dihydrat in 15 ml Wasser hergestellt.

Der Einfluss der zubereiteten Teeproben auf den pH-Wert in der Mundhöhle wurde gemäß Testmuster A oder gemäß Testmuster B ermittelt.

Testmuster A umfasste ein 3-minütiges Kauen von Paraffin, eine 4-minütige Ruhepause, eine 15-minütige Kontrollperiode zur Erstellung der Baseline, ein 2-minütiges Spülen mit 15 ml eines erfindungsgemäßen Teegetränks, eine 30-minütige Kontrollperiode, ein 2-minütiges Spülen mit Wasser, ein 3-minütiges Kauen von Paraffin, eine 4-minütige Ruheperiode, ein 2-minütiges Spülen mit 15 ml einer 0,3 mol/l Saccharose-Lösung, eine 30-minütige Kontrollperiode, ein 2-minütiges Spülen mit Wasser, ein 3-minütiges Kauen von Paraffin und eine 4-minütige Ruheperiode. Die Ergebnisse sind in den Figuren 1 bis 8 dargestellt.

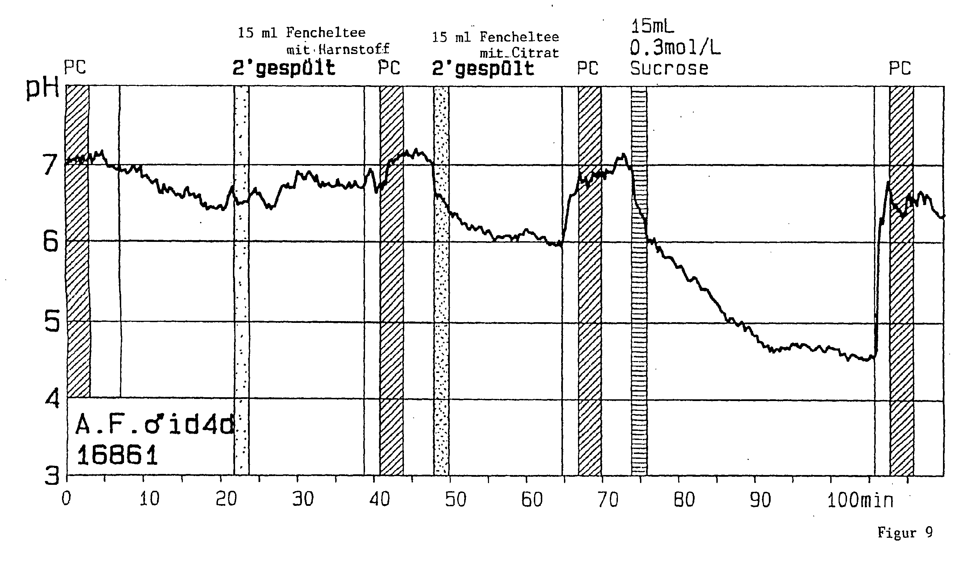

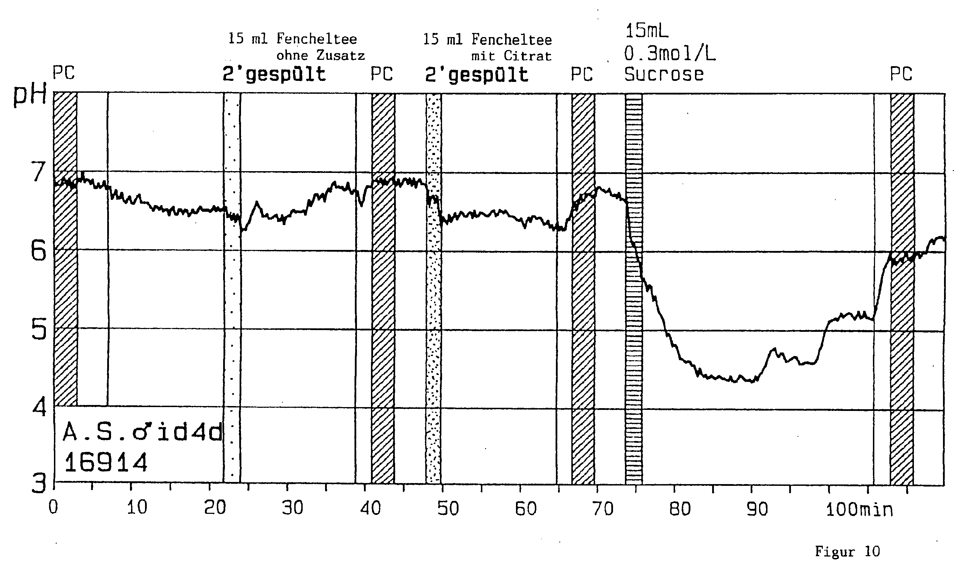

Testmuster B umfasste ein 3-minütiges Kauen von Paraffin, eine 4-minütige Ruhepause, eine 15-minütige Kontrollperiode zur Erstellung der Baseline, ein 2-minütiges Spülen mit 15 ml eines ersten erfindungsgemäßen Teegetränks, eine 15-minütige Kontrollperiode, ein 2-minütiges Spülen mit Wasser, ein 3-minütiges Kauen von Paraffin, eine 4-minütige Ruheperiode, ein 2-minütiges Spülen mit 15 ml eines zweiten erfindungsgemäßen Teegetränks, eine 15-minütige Kontrollperiode, ein 2-minütiges Spülen mit Wasser, ein 3-minütiges Kauen von Paraffin, eine 4-minütige Ruheperiode, ein 2-minütiges Spülen mit 15 ml einer 0,3 mol/l Saccharose-Lösung, eine 30-minütige Kontrollperiode, ein 2-minütiges Spülen mit Wasser, ein 3-minütiges Kauen von Paraffin und eine 4-minütige Ruheperiode. Die Ergebnisse sind in den Figuren 9 und 10 dargestellt.

Der Einfluss der verschiedenen getesteten erfindungsgemäßen und nicht erfindungsgemäßen Instant-Tees auf den pH-Wert der Interdentalplaques ist in Tabelle 1 dargestellt. Die nach dem Kauen von Paraffin erhaltenen pH-Werte stimmen mit den in früheren Untersuchungen ermittelten pH-Werten der gleichen Probanden bei gleichem Plaquealter überein und zeigen spezifische physiologische orale Verhältnisse der Probanden. Das Absenken des pH-Wertes nach Spülung mit 0,3 mol/l Saccharose-Lösung dient als Positivkontrolle und zeigt das korrekte Funktionieren des Mess-Systems und des Plaque-Metabolismus. Die Untersuchungen zeigen, dass es während und nach dem Spülen mit den jeweiligen erfindungsgemäßen Teegetränken zu unterschiedlichen Ansäuerungen der Interdentalräume beziehungsweise der Plaques kommt. Nach dem Genuss von Zucker unterschreiten die in der Plaque entstehenden Gärungssäuren die kritische pH-Schwelle von 5,7 erheblich und anhaltend.

Das Instant-Fenchelteegetränk ohne puffernden Zusatz liegt grenzwertig im Bereich zahnschonender Produkte. Der erfindungsgemäße Fencheltee mit Harnstoff-Zusatz ist als zahnschonend einzustufen. Das heißt, der Zusatz von Harnstoff bewirkt eine Neutralisierung der Gärungssäuren. Auch der Fencheltee mit tri-Natriumcitrat-dihydrat-Zusatz ist als zahnschonend einzustufen. Das heißt, auch ein Salz wie Natriumcitrat kann die bei der Fermentation in der Mundhöhle entstehenden Säuren neutralisieren.

Das Instant-Grünteegetränk ohne puffernde Zusätze ist grenzwertig im Bereich zahnschonender Produkte einzuordnen. Nur bei einer ermittelten Kurve fiel der pH-Wert kurzzeitig auf 5,6.

**Tabelle 1**

| | | | | | | | | | | | | | |
|---|---|---|---|---|---|---|---|---|---|---|---|---|---|
| Einfluss von erfindungsgemäßen und nicht erfindungsgemäßen Instant-Teegetränken auf den telemetrisch gemessenen pH-Wert der Interdentalplaque. Die angeführten Zahlen entsprechen den niedrigsten, während der Kontrollperioden registrierten pH-Werten der Probanden. | | | | | | | | | | | | | |

| **Testmuster** | | | | | **A** | | | | | | | **B** | |
|---|---|---|---|---|---|---|---|---|---|---|---|---|---|
| Anzahl Messungen | | | | | 8 | | | | | | | 2 | |
| Figur | 1 | 2 | 3 | 4 | | 5 | 6 | 7 | 8 | | 9 | | 10 |
| Plaquealter in Tagen | 3 | 6 | 4 | 5 | | 7 | 3 | 6 | 4 | | 4 | | 4 |
| pH Paraffin (Anfang) | 6,90 | 7,00 | 7,00 | 6,95 | | 7,00 | 7,00 | 7,00 | 6,95 | | 7,05 | | 6,85 |
| pH Fencheltee ohne Zusatz | 6,05 | 5,65 | | | | | | | | | | | 6,20 |
| pH Fencheltee mit Harnstoff | | | | | | 6,55 | 6,80 | | | | 6,40 | | |
| pH Grüntee ohne Zusatz | | | | | | | | 5,95 | 5,60 | | | | |
| pH Fencheltee mit tri-Natriumcitrat-dihydrat | | | 5,90 | 6,30 | | | | | | | 5,95 | | 6,25 |
| pH 0,3 mol/L (10%) Saccharose | 4,00 | 3,90 | 4,15 | 4,30 | 4,65 | 4,35 | 4,35 | 4,35 | 4,55 | | 4,50 | | 4,30 |
| pH Paraffin (Ende) | 5,95 | 6,30 | 6,20 | 6,40 | 6,00 | 6,35 | 6,50 | 6,65 | | | 6,55 | | 6,00 |

## Patentansprüche

1. Instant-Getränkepulver, enthaltend ≥ 90 Gew.-%, bezogen auf die Gesamtmenge, Isomaltulose als Trägerstoff, ≤ 5 Gew.-%, bezogen auf die Gesamtmenge, Wasser, 0,1 Gew.-% bis 5 Gew.-%, bezogen auf die Gesamtmenge, Extrakt aus Pflanzen und/oder Pflanzenteilen und 0,1 Gew.-% bis 5 Gew.-%, bezogen auf die Gesamtmenge, Harnstoff oder ein Derivat davon als puffernden Zusatz.

2. Instant-Getränkepulver nach Anspruch 1, wobei der Extrakt ein Extrakt aus Pflanzenteilen des Teestrauches ist.

3. Instant-Getränkepulver nach Anspruch 1 oder 2, wobei der Extrakt ein Extrakt aus schwarzem Tee ist.

4. Instant-Getränkepulver nach einem der Ansprüche 1 bis 3, wobei das Instant-Getränkepulver ein Instant-Schwarzteepulver ist.

5. Instant-Getränkepulver nach Anspruch 1 oder 2, wobei der Extrakt ein Extrakt aus Oolongtee ist.

6. Instant-Getränkepulver nach Anspruch 5, wobei das Instant-Getränkepulver ein Instant-Oolongteepulver ist.

7. Instant-Getränkepulver nach Anspruch 1 oder 2, wobei der Extrakt ein Extrakt aus grünem Tee ist.

8. Instant-Getränkepulver nach Anspruch 7, wobei das Instant-Getränkepulver ein Instant-Grünteepulver ist.

9. Instant-Getränkepulver nach einem der Ansprüche 1 bis 8, wobei der Extrakt zusätzlich natürliche oder naturidentische Geruch-und/oder Geschmacksstoffe enthält..

10. Instant-Getränkepulver nach einem der Ansprüche 1 bis 8, wobei der Extrakt aus einem Tee gewonnen wird, dem zur Aromatisierierung aromagebende Fruchtsäfte, geruch- und/oder geschmackgebende Pflanzen oder Pflanzenteile oder aromagebende Trinkbranntweine wie Whisky, Arrak oder Rum zugesetzt wurden.

11. Instant-Getränkepulver nach Anspruch 9 oder 10, wobei das Instant-Getränkepulver ein aromatisiertes Instant-Schwarztee-, Instant-Grüntee- oder Instant-Oolongteepulver ist.

12. Instant-Getränkepulver nach Anspruch 1, wobei der Extrakt aus Pflanzen oder Pflanzenteilen gewonnen, die nicht vom Teestrauch stammen.

13. Instant-Getränkepulver nach Anspruch 12, wobei der Extrakt aus Anis, Baldrianwurzel, Brennessel, Brombeerblättern, Erdbeerblättern, Fenchel, Frauenmantel, Gänsefingerkraut, Ginseng, Hagebutte, Heidelbeerblättern, Hibiskusblüten, Himbeerblättem, Holunder, Hopfen, Ingwer, Johannisbeerblättern, Johanniskraut, Kamille, Koriander, Krauseminze, Lapacho-Pflanze, Lavendel, Lemon-Gras, Lindenblüten, Löwenzahn, Majoran, Malve, Mannstreu, Mate-Pflanze, Melisse, Mistel, Pfefferminze, Pfingstrose, Ringelblume, Rosmarin, Rotbusch, Schafgarbe, Spitzwegerich, Thymian, Verbena, Weißdorn, Ysop. Zimt und/oder Teilen davon gewonnen wird.

14. lnstant-Getränkepulver nach Anspruch 13, wobei das Instant-Getränkepulver ein Instant-Kräuterteepulver ist.

15. Instant-Getränkepulver nach Anspruch 13 oder 14, wobei der Extrakt zusätzlich natürliche oder naturidentische Geruch- oder Geschmacksstoffe enthält.

16. Instant-Getränkepulver nach Anspruch 13 oder 14, wobei der Extrakt aus Pflanzen oder Pflanzenteilen gewonnen wird, denen zur Aromatisierierung aromagebende Fruchtsäfte zugesetzt wurden.

17. Instant-Getränkepulver nach Anspruch 15 oder 16, wobei das Instant-Getränkepulver ein aromatisiertes Instant-Kräuterteepulver ist.

18. Instant-Getränkepulver nach Anspruch 1, wobei das Instant-Getränkepulver einen aus Früchten gewonnenen Extrakt enthält.

19. Instant-Getränkepulver nach Anspruch 18, wobei der Extrakt aus Äpfeln, Ananas, Birnen, Orangen, Grapefruit, Limonen, Passionsfrüchten, Pfirsichen, Sanddorn-Beeren und/oder Zitronen gewonnen wird.

20. Instant-Getränkepulver, enthaltend ≥ 90 Gew.-%, bezogen auf die Gesamtmenge, Isomaltulose als Trägerstoff, ≤ 5 Gew.-%, bezogen auf die Gesamtmenge, Wasser, 0,1 Gew.-% bis 5 Gew.-%, bezogen auf die Gesamtmenge, natürliche oder naturidentische Fruchtaromen und 0,1 Gew.-% bis 5 Gew.-%, bezogen auf die Gesamtmenge, Harnstoff oder ein Derivat davon als puffernden Zusatz.

21. Instant-Getränkepulver nach einem der Ansprüche 18 bis 20, wobei das Instant-Getränkepulver ein Instant-Früchteteepulver ist.

22. Instant-Getränkepulver nach einem der Ansprüche 1 bis 21, wobei das Instant-Getränkepulver Fließhilfsmittel enthält.

23. Instant-Getränkepulver nach Anspruch 22, wobei das Fließhilfsmittel Siliciumdioxid ist.

24. Instant-Getränkepulver nach einem der Ansprüche 1 bis 23, wobei das Instant-Getränkepulver natürliche und/oder synthetische Farbstoffe enthält.

25. Instant-Getränkepulver nach Anspruch 24, wobei die natürlichen Farbstoffe ausgewählt sind aus der Gruppe bestehend aus einem Farbstoff pflanzlicher Herkunft, einem Farbstoff tierischer Herkunft, einem anorganischen Pigment, einem Produkt der enzymatischen Bräunung, einem Produkt der nichtenzymatischen Bräunung und einem Kohlenhydrat-Erhitzungsprodukt.

26. Instant-Getränkepulver nach Anspruch 24, wobei die synthetischen Farbstoffe ausgewählt sind aus der Gruppe bestehend aus einer Azo-Verbindung, einer Triphenylmethan-Verbindung, einer Indigoid-Verbindung, einer Xanthen-Verbindung und einer Chinolin-Verbindung.

27. Instant-Getränkepulver nach einem der Ansprüche 1 bis 26, wobei das Instant-Geträrikepulver natürliche oder synthetische Vitamine enthält.

28. Instant-Getränkepulver nach Anspruch 27, wobei die Vitamine ausgewählt sind aus der Gruppe bestehend aus Vitamin A, Vitamin 6₁. Vitamin -B₂, Vitamin B₃, Vitamin B₅, Vitamin B₆, Vitamin B₁₂, Vitamin B-Komplex, Vitamin C. Vitamin D, Vitamin E, Vitamin F und Vitamin K.

29. Instant-Getränkepulver nach einem der Ansprüche 1 bis 28. wobei das Instant-Getränkepulver Mineralstoffe und Spurenelemente enthält.

30. Instant-Getränkepulver nach einem der Ansprüche 1 bis 29, wobei das Instant-Getränkepulver mindestens einen Intensiv-Süßstoff enthält.

31. Instant-Getränkepulver nach Anspruch 30, wobei der Intensiv-Süßstoff ausgewählt ist aus der Gruppe bestehend aus Saccharin, Saccharin-Na, Saccharin-K, Saccharin-Ca, Natriumcyclamat, Calciumcyclamat, Acesulfam-K, Aspartam, Dulcin, Steviosid und Neohesperidindihydrochalkon.

32. Verwendung von Harnstoff oder einem Derivat davon als puffernder Zusatz zur Herstellung von Isomaltulose-haltigen Instant-Getränkepulvern, die ≥ 90 Gew.-%, bezogen die Gesamtmenge, Isomaltulose als Trägerstoff, ≤ 5 Gew.-%, bezogen auf die Gesamt menge, Wasser und 0,1 Gew.-% bis 5 Gew.-%, bezogen auf die Gesamtmenge. Extrakt aus Pflanzen und/oder Pflanzenteilen oder 0,1 Gew.-% bis 5 Gew.-%, bezogen auf die Gesamtmenge, natürliche oder naturidentische Fruchtaromen enthalten.

33. Verwendung nach Anspruch 32, wobei Harnstoff oder das Derivat davon bei Konsum der unter Verwendung der Isomaltulose-haltigen Instant-Getränkepulver hergestellten Getränke in der Mundhöhle eine Absenkung des pH-Wertes in den sauren Bereich verhindert.

34. Verwendung nach Anspruch 32, wobei Harnstoff oder das Derivat davon die Süßkraft von Isomaltulose verstärkt.

## Claims

1. An instant beverage powder comprising ≥ 90 % by weight, based on the total amount, of isomaltulose as carrier, ≤ 5 % by weight, based on the total amount, of water, 0.1 % by weight to 5 % by weight, based on the total amount, of extract of plants and/or of plant parts and 0.1 % by weight to 5 % by weight, based on the total amount, of urea or a derivative thereof as buffering additive.

2. The instant beverage powder as claimed in claim 1, wherein the extract is an extract of plant parts of the tea shrub.

3. The instant beverage powder as claimed in claim 1 or 2, wherein the extract is an extract of black tea.

4. The instant beverage powder as claimed in one of claims 1 to 3, wherein the instant beverage powder is an instant black tea powder.

5. The instant beverage powder as claimed in claim 1 or 2, wherein the extract is an extract of Oolong tea.

6. The instant beverage powder as claimed in claim 5, wherein the instant beverage powder is an instant Oolong tea powder.

7. The instant beverage powder as claimed in claim 1 or 2, wherein the extract is an extract of green tea.

8. The instant beverage powder as claimed in claim 7, wherein the instant beverage powder is an instant green tea powder.

9. The instant beverage powder as claimed in one of claims 1 to 8, wherein the extract additionally comprises natural or nature-identical odour substances and/or taste substances.

10. The instant beverage powder as claimed in one of claims 1 to 8, wherein the extract is isolated from a tea to which, for aromatization, flavoring fruit juices, odour-giving and/or taste-giving plants or plant parts, or flavoring potable spirits such as whisky, arrack or rum have been added.

11. The instant beverage powder as claimed in claim 9 or 10, wherein the instant beverage powder is an aromatized instant black tea powder, instant green tea powder or instant Oolong tea powder.

12. The instant beverage powder as claimed in claim 1, wherein the extract is isolated from plants or plant parts which do not come from the tea shrub.

13. The instant beverage powder as claimed in claim 12, wherein the extract is isolated from aniseed, valerian root, stinging nettles, blackberry leaves, strawberry leaves, fennel, lady's mantel, silverweed, ginseng, rosehip, bilberry leaves, hibiscus blossoms, raspberry leaves, elder, hops, ginger, blackcurrant leaves, St. John's wort, chamomile, coriander, spearmint, Lapacho plant, lavender, lemon grass, linden blossoms, dandelion, marjoram, mallow, field eryngo, mate plant, lemon balm, mistletoe, peppermint, peony, marigold, rosemary, Rooibos, yarrow, ribwort plantain, thyme, verbena, hawthorn, hyssop, cinnamon and/or from parts thereof.

14. The instant beverage powder as claimed in claim 13, wherein the instant beverage powder is an instant herbal tea powder.

15. The instant beverage powder as claimed in claim 13 or 14, wherein the extract additionally comprises natural or nature-identical odour substances or taste substances.

16. The instant beverage powder as claimed in claim 13 or 14, wherein the extract is isolated from plants or plant parts to which, for aromatization, flavoring fruit juices have been added.

17. The instant beverage powder as claimed in claim 15 or 16, wherein the instant beverage powder is an aromatized instant herbal tea powder.

18. The instant beverage powder as claimed in claim 1, wherein the instant beverage powder comprises an extract isolated from fruits.

19. The instant beverage powder as claimed in claim 18, wherein the extract is isolated from apples, pineapples, pears, oranges, grapefruit, limes, passion fruits, peaches, sea buckthorn berries and/or lemons.

20. The instant beverage powder comprising ≥ 90% by weight, based on the total amount, of isomaltulose as carrier, ≤ 5% by weight, based on the total amount, of water, 0.1 % by weight to 5% by weight, based on the total amount, of natural or nature-identical fruit flavorings and 0.1 % by weight to 5% by weight, based on the total amount, of urea or a derivative thereof as buffering additive.

21. The instant beverage powder as claimed in one of claims 18 to 20, wherein the instant beverage powder is an instant fruit tea powder.

22. The instant beverage powder as claimed in one of claims 1 to 21, wherein the instant beverage powder comprises flow promoters.

23. The instant beverage powder as claimed in claim 22, wherein the flow promoter is silicon dioxide.

24. The instant beverage powder as claimed in one of claims 1 to 23, wherein the instant beverage powder comprises natural and/or synthetic colorings.

25. The instant beverage powder as claimed in claim 24, wherein the natural colorings are selected from the group consisting of a coloring of plant origin, a coloring of animal origin, an inorganic pigment, a product of enzymatic browning, a product of non-enzymatic browning and a carbohydrate heating product.

26. The instant beverage powder as claimed in claim 24, wherein the synthetic colorings are selected from the group consisting of an azo compound, a triphenylmethane compound, an indigoid compound, a xanthene compound and a quinoline compound.

27. The instant beverage powder as claimed in one of claims 1 to 26, wherein the instant beverage powder comprises natural or synthetic vitamins.

28. The instant beverage powder as claimed in claim 27, wherein the vitamins are selected from the group consisting of vitamin A, vitamin B₁, vitamin B₂, vitamin B₃, vitamin B₅, vitamin B₆, vitamin B₁₂, vitamin B complex, vitamin C, vitamin D, vitamin E, vitamin F and vitamin K.

29. The instant beverage powder as claimed in one of claims 1 to 28, wherein the instant beverage powder comprises minerals and trace elements.

30. The instant beverage powder as claimed in one of claims 1 to 29, wherein the instant beverage powder comprises at least one intense sweetener.

31. The instant beverage powder as claimed in claim 30, wherein the intense sweetener is selected from the group consisting of saccharin, saccharin-Na, saccharin-K, saccharin-Ca, sodium cyclamate, calcium cyclamate, acesulfame-K, aspartame, dulcine, stevioside and neohesperidine dihydrochalcone.

32. The use of urea or a derivative thereof as buffering additive for the preparation of isomaltulose-containing instant beverage powders comprising ≥ 90 % by weight, based on the total amount, of isomaltulose as carrier, ≤ 5 % by weight, based on the total amount, of water and 0.1 % by weight to 5 % by weight, based on the total amount, of extract of plants and/or of plant parts or 0.1% by weight to 5% by weight, based on the total amount, of natural or nature-identical fruit flavorings.

33. The use as claimed in claim 32, wherein urea or the derivative thereof, on consumption of the beverages produced using the isomaltulose-containing instant beverage powders, prevents a lowering of the pH in the oral cavity to the acidic range.

34. The use as claimed in claim 32, wherein urea or the derivative thereof reinforces the sweetening power of isomaltulose.

## Revendications

1. Poudre pour boisson instantanée contenant ≥ 90 % en poids, par rapport à la quantité totale, d'isomaltulose comme support, ≤ 5 % en poids, par rapport à la quantité totale, d'eau, 0,1 % en poids à 5 % en poids, par rapport à la quantité totale, d'extrait de plantes et/ou de parties de plantes et 0,1 % en poids à 5 % en poids, par rapport à la quantité totale, d'urée ou d'un dérivé de celle-ci comme additif tampon.

2. Poudre pour boisson instantanée selon la revendication 1, l'extrait étant un extrait de parties de plantes du théier.

3. Poudre pour boisson instantanée selon la revendication 1 ou 2, l'extrait étant un extrait de thé noir.

4. Poudre pour boisson instantanée selon l'une quelconque des revendications 1 à 3, la poudre pour boisson instantanée étant une poudre de thé noir instantanée.

5. Poudre pour boisson instantanée selon la revendication 1 ou 2, l'extrait étant un extrait de thé Oolong.

6. Poudre pour boisson instantanée selon la revendication 5, la poudre pour boisson instantanée étant une poudre de thé Oolong instantanée.

7. Poudre pour boisson instantanée selon la revendication 1 ou 2, l'extrait étant un extrait de thé vert.

8. Poudre pour boisson instantanée selon la revendication 7, la poudre pour boisson instantanée étant une poudre de thé vert instantanée.

9. Poudre pour boisson instantanée selon l'une quelconque des revendications 1 à 8, l'extrait contenant en outre des substances odorantes et/ou aromates naturels ou identiques au naturel.

10. Poudre pour boisson instantanée selon l'une quelconque des revendications 1 à 8, l'extrait étant obtenu à partir d'un thé auquel sont ajoutés en vue d'aromatiser des jus de fruits donnant un arôme, des plantes ou parties de plantes donnant une odeur et/ou un goût ou des eaux-de-vie donnant un arôme comme le whisky, l'arak ou le rhum.

11. Poudre pour boisson instantanée selon la revendication 9 ou 10, la poudre pour boisson instantanée étant une poudre de thé noir instantanée, de thé vert instantanée ou de thé Oolong instantanée aromatisée.

12. Poudre pour boisson instantanée selon la revendication 1, l'extrait étant obtenu à partir de plantes ou parties de plantes qui ne proviennent pas du théier.

13. Poudre pour boisson instantanée selon la revendication 12, l'extrait étant obtenu à partir d'anis, de racine de valériane, d'ortie, de feuilles de mûres, de feuilles de fraises, de fenouil, d'alchémille, de potentille ansérine, de ginseng, de cynorhodon, de feuilles de myrtilles, de fleurs d'hibiscus, de feuilles de framboises, de sureau, de houblon, de gingembre, de feuilles de groseilles, de millepertuis, de camomille, de coriandre, de menthe crépue, de plante de lapacho, de lavande, de verveine des Indes, de fleurs de tilleul, de pissenlit, de marjolaine, de mauve, de panicaut, de plante de maté, de mélisse, de gui, de menthe poivrée, de pivoine, de souci, de romarin, de rooibos, de millefeuille, de plantain, de thym, de verveine, de d'aubépine, d'hysope, de cannelle et/ou de parties de ceux-ci.

14. Poudre pour boisson instantanée selon la revendication 13, la poudre pour boisson instantanée étant une poudre de tisane instantanée.

15. Poudre pour boisson instantanée selon la revendication 13 ou 14, l'extrait contenant en outre des substances odorantes ou aromates naturels ou identiques au naturel.

16. Poudre pour boisson instantanée selon la revendication 13 ou 14, l'extrait étant obtenu à partir de plantes ou parties de plantes auxquelles sont ajoutés des jus de fruits donnant un arôme en vue d'aromatiser.

17. Poudre pour boisson instantanée selon la revendication 15 ou 16, la poudre pour boisson instantanée étant une poudre de tisane instantanée aromatisée.

18. Poudre pour boisson instantanée selon la revendication 1, la poudre pour boisson instantanée contenant un extrait obtenu à partir de fruits.

19. Poudre pour boisson instantanée selon la revendication 18, l'extrait étant obtenu à partir de pommes, d'ananas, de poires, d'oranges, de pamplemousse, de citrons verts, de fruits de la passion, de pêches, de fruits de l'argousier et/ou de citrons.

20. Poudre pour boisson instantanée contenant ≥ 90 % en poids, par rapport à la quantité totale, d'isomaltulose comme support, ≤ 5 % en poids, par rapport à la quantité totale, d'eau, 0,1 % en poids à 5 % en poids, par rapport à la quantité totale, d'arômes de fruits naturels ou identiques au naturel et 0,1 % en poids à 5 % en poids, par rapport à la quantité totale, d'urée ou d'un dérivé de celle-ci comme additif tampon.

21. Poudre pour boisson instantanée selon l'une quelconque des revendications 18 à 20, la poudre pour boisson instantanée étant une poudre de thé aux fruits instantanée.

22. Poudre pour boisson instantanée selon l'une quelconque des revendications 1 à 21, la poudre pour boisson instantanée contenant des aides à la circulation.

23. Poudre pour boisson instantanée selon la revendication 22, l'aide à la circulation étant le dioxyde de silicium.

24. Poudre pour boisson instantanée selon l'une quelconque des revendications 1 à 23, la poudre pour boisson instantanée contenant des colorants naturels et/ou synthétiques.

25. Poudre pour boisson instantanée selon la revendication 24, les colorants naturels étant sélectionnés parmi le groupe constitué d'un colorant d'origine végétale, d'un colorant d'origine animale, d'un pigment inorganique, d'un produit du brunissage enzymatique, d'un produit du brunissage non enzymatique et d'un produit du réchauffement de glucide.

26. Poudre pour boisson instantanée selon la revendication 24, les colorants synthétiques étant sélectionnés parmi le groupe constitué d'un composé azo, d'un composé de triphénylméthane, d'un composé d'indigoïde, d'un composé de xanthène et d'un composé de quinoline.

27. Poudre pour boisson instantanée selon l'une quelconque des revendications 1 à 26, la poudre pour boisson instantanée contenant des vitamines naturelles ou synthétiques.

28. Poudre pour boisson instantanée selon la revendication 27, les vitamines étant sélectionnées parmi le groupe constitué de la vitamine A, de la vitamine B₁, de la vitamine B₂, de la vitamine B₃, de la vitamine B₅, de la vitamine B₆, de la vitamine B₁₂, du complexe de vitamine B, de la vitamine C, de la vitamine D, de la vitamine E, de la vitamine F et de la vitamine K.

29. Poudre pour boisson instantanée selon l'une quelconque des revendications 1 à 28, la poudre pour boisson instantanée contenant des minéraux et des éléments traces.

30. Poudre pour boisson instantanée selon l'une quelconque des revendications 1 à 29, la poudre pour boisson instantanée contenant au moins un édulcorant intensif.

31. Poudre pour boisson instantanée selon la revendication 30, l'édulcorant intensif étant sélectionné parmi le groupe constitué de la saccharine, de la saccharine-Na, de la saccharine-K, de la saccharine-Ca, du cyclamate sodique, du cyclamate calcique, de l'acésulfame-K, de l'aspartame, de la dulcine, du stévioside et de la néohespéridine dihydrochalcone.

32. Utilisation d'urée ou d'un dérivé de celle-ci comme additif tampon en vue de la préparation de poudres pour boisson instantanées contenant de l'isomaltulose qui contiennent ≥ 90 % en poids, par rapport à la quantité totale, d'isomaltulose comme support, ≤ 5 % en poids, par rapport à la quantité totale, d'eau et 0,1 % en poids à 5 % en poids, par rapport à la quantité totale, d'extrait de plantes et/ou de parties de plantes ou 0,1 % en poids à 5 % en poids, par rapport à la quantité totale, d'arômes de fruits naturels ou identiques au naturel.

33. Utilisation selon la revendication 32, l'urée ou le dérivé de celle-ci empêchant lors de la consommation de la boisson préparée en utilisant la poudre pour boisson instantanée contenant de l'isomaltulose dans la cavité buccale une diminution du pH dans le domaine acide.

34. Utilisation selon la revendication 32, l'urée ou le dérivé de celle-ci renforçant le pouvoir sucrant de l'isomaltulose.
